# EUROPEAN PATENT SPECIFICATION

(11) **EP 0 945 057 B1**
(45) Date of publication and mention of the grant of the patent: **23.07.2003**
(21) Application number: 99200629.6
(22) Date of filing: 04.03.1999
(51) Int. Cl.: A01J 7/04, A01K 13/00

(54) **A device for and a method of cleaning and/or disinfecting a teat of an animal**
Vorrichtung und Verfahren zum Reinigen und/oder Desinfizieren der Titzen eines Tieres
Appareil et méthode pour nettoyer et/ou désinfecter les trayons d'un animal

(30) Priority: 23.03.1998 NL 1008673
(43) Date of publication of application: 29.09.1999
(73) Proprietor: MAASLAND N.V., 3155 PD Maasland (NL)
(72) Inventor: Xavier, Richard, 67290 Wingen sur Morder (FR)
(74) Representative: Corten, Maurice Jean F.M.

(56) References cited:
- EP-A- 0 207 572
- EP-A- 0 277 396
- EP-A- 0 645 079
- EP-A- 0 801 893

## Description

The invention relates to a device for cleaning and/or disinfecting a teat of an animal as claimed in the preamble of claim 1.

Such a device is known from EP-A-0801893 in which the device for cleaning the teat is disposed in the teat cup such that the teat is cleaned in the teat cup.

The invention aims at providing an alternative device.

In accordance with the invention this is achieved by the features according to the characterizing part of claim 1. Since the spraying elements are being arranged in such a manner that during operation they are spraying cleaning and/or disinfecting fluid onto a teat being outside the teat cup, and thus cleaning of the teat in the teat cup is excluded.

In a preferred embodiment of the invention the spraying elements are arranged near the upper edge of the teat cup. According to a further inventive feature, the spraying elements are arranged around the upper edge of the teat cup.

In order to prevent cleaning and/or disinfecting fluid from coming into the teat cup, according to again another preferred feature, the spraying elements are arranged or designed in such a manner that during operation they are spraying the cleaning and/or disinfecting fluid obliquely upwards through the opening of the teat cup in the direction of its centre line.

According to a preferred feature, the cleaning and/or disinfecting device is fitted to the outer casing of the teat cup. According to a preferred feature, this can be realized in a simple manner in that the cleaning and/or disinfecting device is attached to the teat cup by means of an elastic stocking or shrink stocking.

In accordance with another preferred aspect of the invention, the cleaning and/or disinfecting device comprises a supply line for supplying the cleaning and/or disinfecting fluid, as well as a distribution element connected thereto, with the aid of which distribution element the supply line is split up into further supply lines to the spraying elements.

According to again another preferred feature, the device is provided with a milking robot by means of which the cleaning and/or disinfecting device can be moved towards the teats or be connected to the teats of an animal to be milked.

According to again another preferred aspect of the invention, the device is provided with a withdrawal member for disconnecting the teat cup from a teat. In a preferred embodiment, the milking robot comprises the withdrawal member. According to again another preferred feature, the cleaning and/or disinfecting device comprises adjusting means with the aid of which the pressure at which and/or the period of time during which the fluid is sprayed against the teat can be controlled and/or adjusted.

The invention further relates to a method of cleaning and/or disinfecting a teat, in which method, during and/or just after disconnecting the teat cup from the teat, cleaning and/or disinfecting fluid is sprayed against a teat by means of a cleaning and/or disinfecting device.

The invention will now further be explained with reference to the accompanying drawings in which
Figure 1 is a side view of a teat cup provided with a cleaning and/or disinfecting device;
Figure 2 is a side view of the device for cleaning and/or disinfecting a teat during operation
Figure 3 is a plan view of a teat cup according to the arrows III - III in Figure 2.

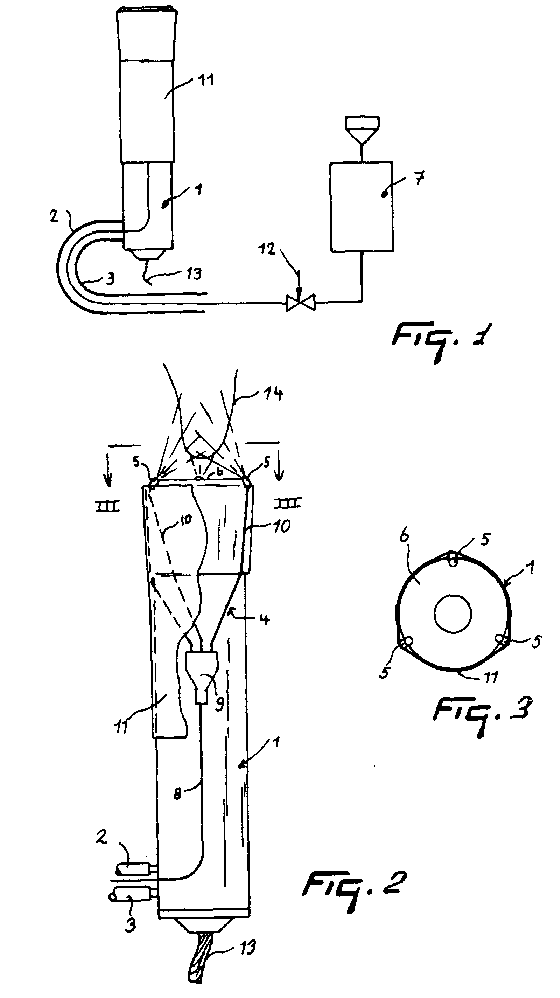

Figure 1 is a side view of a device for cleaning and/or disinfecting a teat, which device is provided with a teat cup 1 with a milk line 2 and a pulsation line 3. As shown in Figure 2, the teat cup 1 is provided with a cleaning and/or disinfecting device 4. The cleaning and/or disinfecting device 4 comprises three spraying elements 5 (Figure 3). The spraying elements 5 are disposed near the upper edge 6 of the teat cup 1. In this situation the spraying elements 5 are arranged, or in an other (non-shown) embodiment designed, so as to spray the cleaning and/or disinfecting fluid during operation obliquely upwards through the opening of the teat cup 1 in the direction of its centre line. The cleaning and/or disinfecting fluid is stored under pressure in a pressure vessel 7. To the pressure vessel 7 there is connected a supply line 8 in which a distribution element 9 is included, which distribution element 9 splits up the supply line 8 into three further supply lines 10 each of which comprises at its end a spraying element 5. The distribution element 9 and the further supply lines 10 are fixed relative to the teat cup 1 by means of an elastic stocking 11 which is disposed around the outer casing of the teat cup 1.

The cleaning and/or disinfecting device 4 is further provided with computer-controlled adjusting means 12 with the aid of which the pressure at which and/or the period of time during which the fluid is sprayed against a teat can be controlled and/or adjusted.

Near the lower side of the teat cup 1 there is further arranged a withdrawal element 13 which is connected to a (non-shown) withdrawal member by means of which the teat cup 1 can be withdrawn to a (non-shown) robot arm of a milking robot.

The above-described device operates as follows:

Before the teat cup 1 is connected automatically to the teat 14 of an animal to be milked, the teat cup 1 is positioned under the teat 14. Thereupon the computer-controlled adjusting means 12 are activated automatically, after which the cleaning fluid is sprayed against the teat 14. After the teat 14 has been cleaned, the teat cup 1 is connected automatically to the teat 14 of the animal to be milked, whereupon milking is started. After the udder quarter of which the teat 14 constitutes part has been milked out, the teat cup 1 is drawn automatically towards the robot arm by means of the withdrawal member and the withdrawal element 13. Together with disconnecting the teat cup 1 from the teat 14 the disinfecting device 4 is automatically activated with the aid of the computer-controlled adjusting means 12, in such a manner that, during disconnecting the teat cup 1 from the teat 14, disinfecting fluid is sprayed against the teat 14 by means of the spraying elements 5.

In the above-described embodiment only one pressure vessel 7 is shown, so that the choice is limited to either cleaning or disinfecting the teat 14; however it will be obvious that, if both cleaning and disinfecting or any other treatments are desired, it will be possible to connect a plurality of pressure vessels 7 for different fluids to the supply line 8 so that there can be chosen between different treatments.

## Claims

1. A device for cleaning and/or disinfecting a teat of an animal, said device being provided with a teat cup (1), said cleaning and/or disinfecting device (4) comprising one or more spraying elements (5) and being fitted to the teat cup (1), **characterized in that** said spraying elements (5) are arranged in such a manner that during operation they spray cleaning and/or disinfecting fluid onto a teat being outside the teat cup (1).

2. A device as claimed in claim 1, **characterized in that** said spraying elements (5) are disposed near the upper edge (6) of the teat cup (1).

3. A device as claimed in claim 1 or 2, **characterized in that** the spraying elements (5) are disposed around the upper edge (6).

4. A device as claimed in claim 1, 2 or 3, **characterized in that** the spraying elements (5) are arranged or designed in such a manner that during operation they are spraying the cleaning and/or disinfecting fluid obliquely upwards through the opening of the teat cup (1) in the direction of its centre line.

5. A device as claimed in any one of the preceding claims, **characterized in that** the cleaning and/or disinfecting device (4) is fitted to the outer casing of the teat cup (1).

6. A device as claimed in claim 5, **characterized in that** the cleaning and/or disinfecting device (4) is attached to the teat cup (1) by means of an elastic stocking (11) or shrink stocking.

7. A device as claimed in any one of the preceding claims, **characterized in that** the cleaning and/or disinfecting device (4) comprises a supply line (8) for supplying cleaning and/or disinfecting fluid, as well as a distribution element (9) connected thereto, with the aid of which distribution element the supply line (8) is split up into further supply lines (10) to the spraying elements (5).

8. A device as claimed in any one of the preceding claims, **characterized in that** the device is provided with a milking robot.

9. A device as claimed in any one of the preceding claims, **characterized in that** the device is provided with a withdrawal member for disconnecting the teat cup (1) from a teat (14).

10. A device as claimed in claim 9, **characterized in that** the milking robot comprises the withdrawal member.

11. A device as claimed in any one of the preceding claims, **characterized in that** the cleaning and/or disinfecting device (4) comprises adjusting means (12) with the aid of which the pressure at which and/or the period of time during which the fluid is sprayed against the teat (14) can be controlled and/or adjusted.

12. A method of cleaning and/or disinfecting a teat, in which method, during and/or just after disconnecting a teat cup (1) from a teat, cleaning and/or disinfecting fluid is sprayed against a teat (14) by means of a cleaning and/or disinfecting device (4).

## Patentansprüche

1. Vorrichtung zum Reinigen und/oder Desinfizieren einer Zitze eines Tieres, wobei die Vorrichtung mit einem Zitzenbecher (1) versehen ist, wobei die Reinigungsund/oder Desinfektionsvorrichtung (4) ein oder mehrere Sprühelemente (5) umfaßt und an dem Zitzenbecher (1) angebracht ist,
**dadurch gekennzeichnet, daß** die Sprühelemente (5) in der Weise angeordnet sind, daß sie im Betrieb Reinigungs- und/oder Desinfektionsflüssigkeit auf eine außerhalb des Zitzenbechers (1) befindliche Zitze sprühen.

2. Vorrichtung nach Anspruch 1,
**dadurch gekennzeichnet, daß** die Sprühelemente (5) nahe dem oberen Rand (6) des Zitzenbechers (1) angeordnet sind.

3. Vorrichtung nach Anspruch 1 oder 2,
**dadurch gekennzeichnet, daß** die Sprühelemente (5) um den oberen Rand (6) herum angeordnet sind.

4. Vorrichtung nach Anspruch 1, 2 oder 3,
**dadurch gekennzeichnet, daß** die Sprühelemente (5) derart angeordnet oder ausgebildet sind, daß sie im Betrieb die Reinigungs- und/oder Desinfektionsflüssigkeit schräg nach oben durch die Öffnung des Zitzenbechers (1) in Richtung seiner Mittellinie sprühen.

5. Vorrichtung nach einem der vorhergehenden Ansprüche,
**dadurch gekennzeichnet, daß** die Reinigungs- und/oder Desinfektionsvorrichtung (4) am äußeren Gehäuse des Zitzenbechers (1) angebracht ist.

6. Vorrichtung nach Anspruch 5,
**dadurch gekennzeichnet, daß** die Reinigungs- und/oder Desinfektionsvorrichtung (4) an dem Zitzenbecher (1) mit Hilfe eines elastischen Schlauches (11) oder eines Schrumpfschlauches angebracht ist.

7. Vorrichtung nach einem der vorhergehenden Ansprüche,
**dadurch gekennzeichnet, daß** die Reinigungs- und/oder Desinfektionsvorrichtung (4) eine Zuführleitung (8) zum Zuführen von Reinigungs- und/oder Desinfektionsflüssigkeit sowie ein damit verbundenes Verteilerelement (9) umfaßt, mittels dessen die Zuführleitung (8) in weitere Zuführleitungen (10) zu den Sprühelementen (5) aufgeteilt wird.

8. Vorrichtung nach einem der vorhergehenden Ansprüche,
**dadurch gekennzeichnet, daß** die Vorrichtung mit einem Melkroboter versehen ist.

9. Vorrichtung nach einem der vorhergehenden Ansprüche,
**dadurch gekennzeichnet, daß** die Vorrichtung mit einem Rückziehglied zum Abkoppeln des Zitzenbechers (1) von einer Zitze (14) versehen ist.

10. Vorrichtung nach Anspruch 9,
**dadurch gekennzeichnet, daß** der Melkroboter das Rückziehglied umfaßt.

11. Vorrichtung nach einem der vorhergehenden Ansprüche,
**dadurch gekennzeichnet, daß** die Reinigungs- und/oder Desinfektionsvorrichtung (4) eine Stellvorrichtung (12) umfaßt, mittels der der Druck und/oder der Zeitraum, mit dem bzw. während dessen die Flüssigkeit auf die Zitze (14) gesprüht wird, gesteuert und/oder eingestellt werden kann.

12. Verfahren zum Reinigen und/oder Desinfizieren einer Zitze, bei dem während und/oder unmittelbar nach dem Abnehmen eines Zitzenbechers (1) von einer Zitze mittels einer Reinigungs- und/oder Desinfektionsvorrichtung (4) eine Reinigungs- und/oder Desinfektionsflüssigkeit auf eine Zitze (14) gesprüht wird.

## Revendications

1. Dispositif pour nettoyer et/ou désinfecter les trayons d'un animal, ledit dispositif étant pourvu d'un gobelet trayeur (1), ledit dispositif pour nettoyer/et ou désinfecter (4) comprenant un ou plusieurs éléments de pulvérisation (5) fixés sur le gobelet trayeur (1), **caractérisé en ce que** lesdits éléments de pulvérisation (5) sont disposés de telle manière que lors du fonctionnement ils pulvérisent un liquide de nettoyage et/ou de désinfection sur un trayon se trouvant à l'extérieur du gobelet trayeur (1).

2. Dispositif selon la revendication 1, **caractérisé en ce que** lesdits éléments de pulvérisation (5) sont disposés à proximité du bord supérieur (6) du gobelet trayeur (1).

3. Dispositif selon l'une des revendications 1 ou 2, **caractérisé en ce que** les éléments de pulvérisation (5) sont disposés autour du bord supérieur(6).

4. Dispositif selon l'une des revendications 1, 2 ou 3, **caractérisé en ce que** les éléments de pulvérisation (5) sont disposés ou conçus de telle manière qu'au cours du fonctionnement ils pulvérisent le liquide pour nettoyer/et ou désinfecter de manière oblique et vers le haut par l'ouverture du gobelet trayeur (1) dans la direction de son axe médian.

5. Dispositif selon l'une quelconque des revendications précédentes, **caractérisé en ce que** le dispositif pour nettoyer et/désinfecter (4) est placé dans le logement extérieur du gobelet trayeur (1).

6. Dispositif selon la revendication 5, **caractérisé en ce que** le dispositif pour nettoyer et/ou désinfecter (4) est attaché au gobelet trayeur (1) au moyen d'un réservoir élastique (11) ou d'un réservoir rétractable.

7. Dispositif selon l'une quelconque des revendications précédentes, **caractérisé en ce que** le dispositif pour nettoyer et/ou désinfecter (4) comprend une ligne d'approvisionnement (8) servant à acheminer du liquide pour nettoyer et/ou désinfecter ainsi qu'un élément de distribution (9) qui y est raccordé, à l'aide duquel élément de distribution la ligne d'approvisionnement (8) est divisée en plusieurs lignes d'approvisionnement (10) des éléments de pulvérisation (5).

8. Dispositif selon l'une quelconque des revendications précédentes, **caractérisé en ce que** le dispositif est pourvu d'un robot de traite.

9. Dispositif selon l'une quelconque des revendications précédentes, **caractérisé en ce que** le dispositif est pourvu d'un élément de retrait pour détacher le gobelet trayeur (1) d'un trayon (14).

10. Dispositif selon la revendication 9, **caractérisé en ce que** le robot de traite comprend ledit élément de retrait.

11. Dispositif selon l'une quelconque des revendications précédentes, **caractérisé en ce que** le dispositif pour nettoyer et/ou désinfecter (4) comprend des moyens de réglage (12) à l'aide duquel la pression à laquelle et/ou le temps au cours duquel le liquide est pulvérisé sur le trayon (14) peut être contrôlé et/ou ajusté.

12. Procédé pour nettoyer et/ou désinfecter un trayon, procédé selon lequel, pendant et/ou juste après avoir détaché un gobelet trayeur (1) d'un trayon, le liquide de nettoyage et/ou de désinfection est pulvérisé sur un trayon (14) au moyen d'un dispositif pour nettoyer et/ou désinfecter (4).
